# EUROPEAN PATENT SPECIFICATION

(11) **EP 2 620 644 B1**
(45) Date of publication and mention of the grant of the patent: **17.06.2015**
(21) Application number: 12153100.8
(22) Date of filing: 30.01.2012
(51) Int. Cl.: F03D 11/04, F03D 1/00, F03D 11/00

(54) **Improvements to a wind turbine assembly**
Verbesserungen an einer Windturbinenanordnung
Améliorations portant sur un ensemble d'éolienne

(43) Date of publication of application: 31.07.2013
(73) Proprietor: Siemens Aktiengesellschaft, 80333 München (DE)
(72) Inventor: Mehta, Puneet, 7330 Brande (DK); Munk-Hansen, Thorkil, 7323 Give (DK)

(56) References cited:
- EP-A1- 1 985 846
- WO-A1-2008/000265
- US-A1- 2011 012 360

## Description

The present invention concerns a tower of a wind turbine assembly with a connecting portion arranged to interface with a nacelle of a wind turbine. It also concerns a wind turbine assembly and a canopy of a wind turbine nacelle as well as methods of manufacturing a tower of a wind turbine and/or of a wind turbine assembly with a tower and of manufacturing a canopy of a wind turbine nacelle.

Wind turbines convert wind energy into electrical energy. The main operational parts of such wind turbines are normally assembled on top of a wind turbine tower and comprise a nacelle and a hub with rotor blades. Inside the nacelle electric components are assembled which convert the rotational energy of the rotor into electrical energy.

The electric components inside the nacelle, in particular a generator and a drivetrain connecting the hub with such generator, have a very substantial weight. In a direct drive wind turbine for example (i.e. a wind turbine without a gearbox that transforms the rotational movement of the hub into a faster rotation of a downstream drive train) the generator is located inside the nacelle directly adjacent to the hub. Thus the centre of gravity of the nacelle together with the hub and the rotors is not located in the middle axis of the tower but rather away from the tower. Therefore, at low wind conditions the weight of the nacelle and hub with all their components produces a gravity force which results in a pitch momentum which theoretically forces the nacelle on its hub side to pitch downwards. From this pitch momentum there results a torque inside the tower itself. Therefore, the connection between the nacelle and the tower and also the tower itself must be realized such that such a momentum and indeed other momenta that affect the connection between the tower and the nacelle and also the tower are resisted.

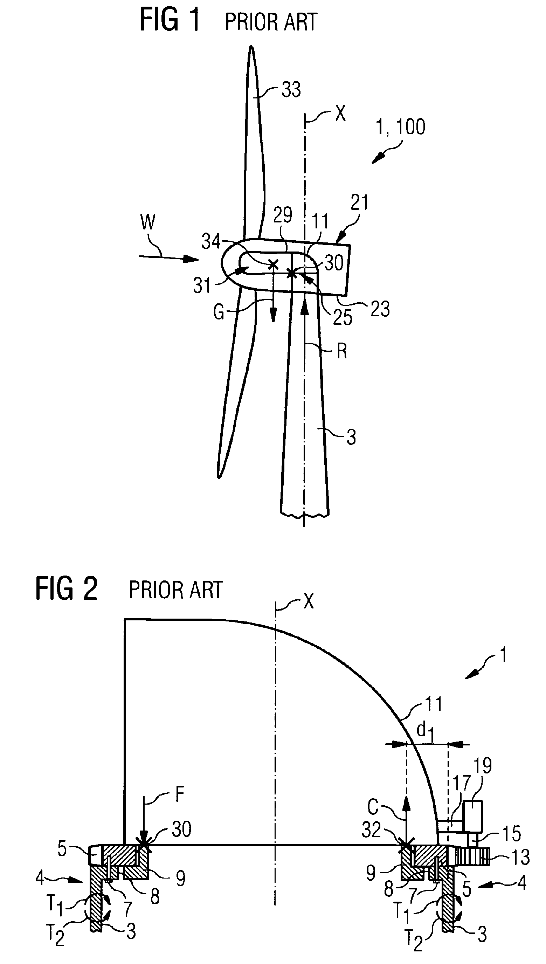

This problem is shown in more detail with reference to figures 1 and 2:

Fig. 1 shows a wind turbine assembly 1, here a completely wind turbine 100 according to the state-of-the-art. The expression "wind turbine assembly" is used in this context for completely assembled wind turbines as shown in this example, but also for wind turbines which are not yet completely assembled. Such is the case during construction of a wind turbine, whereby a wind turbine assembly comprises at least a tower for wind turbine and parts or components of the nacelle of this wind turbine.

The wind turbine 100 comprises a tower 3 with a nacelle 21 on top of the tower 3. The nacelle 21 comprises a canopy or housing 23 which shields the interior of the nacelle 21 from the environment outside. Inside the nacelle 21 there are assembled a bedframe 11 which serves as a stabilisation and connection element to the tower 3 and a main shaft with a direct drive generator 29. Further to the left there can be seen a hub 31 to which rotor blades 33 are attached. The wind comes from a wind direction W and forces the hub 31 to rotate along its axis and thus to drive the generator 29 so that electric energy is converted out of the wind energy. In low wind conditions a gravity force G induced by the overall weight of the nacelle 21 together with the hub 31 and the rotors 33 forces the nacelle 21 downwards from a centre of gravity 34 of the nacelle 21 together with the hub 31 and rotors 33.

As the centre of gravity 34 is not placed in the central axis X of the tower 3 that implies that the gravity force G pulls down the front part of the nacelle 21 to the ground. This gravity force G is withheld by a reverse force R due to the connection between the tower 3 and the nacelle 21 which keeps the nacelle 21 in its desired position. If the wind becomes stronger the gravity force G is partly or fully compensated by a lifting force, which lifting force can even be large enough to completely overcome the gravity force G and rather force the nacelle 21 into the counterdirection, that means upwards from the gravity centre 34. In this case the reverse force R of the tower 3 is directed in the opposite direction.

Fig. 2 depicts a wind turbine arrangement 1 according to the state-of-the-art in a sectional view along the longitudinal extension of the tower 3. For reasons of clarity only the top part of the tower 3 and only the linking components of the nacelle 21 are shown in the drawing. A bedframe 11 of the nacelle 21 rests on the tower 3 and is connected to the tower 3 via the following arrangement:

To the tower 3 there is attached a yaw ring 5 by means of bolts 7 all along the circumference of the tower 3. These bolts 7 are inserted into holes in the tower 3 at a connecting portion 4. On its upper side directed towards the bedframe 11 the connecting portion 4 comprises an interior flange 8 which extends to the interior J of the tower 3. The bedframe 11 is connected to the yaw ring 5 by yaw clamps 9 which encompass the yaw ring 5 at its lower surface. On the outside E of the tower 3 there is located a yaw motor 19 which is connected to the bedframe 11 by means of a holding device 17. From the yaw motor 19 there extends a connection 15 to a toothed wheel 13 which is connected to the yaw ring 5. By operating the yaw motor 19 the bedframe 11 and thus the nacelle 21 altogether can be rotated along the longitudinal axis X of the tower 3.

Due to the gravity force G a downward force F is directed into the connection between the bedframe 11 and the tower 3 at a first connection point 30. On the opposite side of the tower 3, at the connection between the yaw clamp 9 and the bedframe 11, i.e. at a second connection point 32 a counterforce C occurs which pulls the bedframe 11 upwards. This counterforce C has to be compensated by the connection between the bedframe 11 and the tower 3 via the yaw clamp 9. Due to this counterforce C a bending moment T₂ occurs within the tower at the right-hand side of the figure, whereas due to the downward force F a counterdirected bending moment T₁ occurs at the left-hand side of the figure. Once the wind conditions change and the above-mentioned lifting force overcomes the gravity force G, the bending moments T₁, T₂ in the tower 3 are exactly reverse.

Because of the loads which occur in the region of the connection between the tower 3 and the bedframe 11, i.e. between the tower 3 and the nacelle 21, this connection must be strong enough to withhold substantial forces and moments. In particular, the tower itself must be designed strong enough to withhold all possible bending moments T₁, T₂ induced by the gravity force G and the lifting forces. Even a tower design that incorporates the yaw drive in the tower interior, for example as disclosed by US2011/0012360 A1 and EP 1 985 846 A1, potentially damaging bending moments can occur on account of distances between connecting points and tower wall.

It is thus the object of the invention to improve the connection between the tower of a wind turbine and those parts of the wind turbine which rest thereon, without necessarily requiring a redesign of existing components such as a the yaw drive or a tower top section. In particular, these improvements relate to a reduction of loads and momenta and/or to an improvement of maintenance and/or manufacturing possibilities in this region of the connection.

This object is met by the tower according to claim 1, by the tower according to claim 2, the wind turbine assembly according to claim 9, the canopy according to claim 12 and the methods according to claims 13, 14 and 15.

Accordingly, a tower of the above-mentioned kind is characterized in a first embodiment by the fact that the connecting portion comprises a first, exterior, flange at an interface to the nacelle which first flange extends to the exterior of the tower and is realised for attachment to a yaw ring of a yaw motor arranged on the exterior of the tower.

Thus, instead of using an interior flange extending, i.e. projecting to the interior, i.e. inside, of the tower, use is made of an exterior flange which extends to the exterior, i.e. outside of the tower. By this measure, which is particularly easy to realize by a mere redesign of the top section of the tower, the distance between the connecting point and the tower wall is reduced, which automatically reduces the local bending moment in the tower wall due to the gravity force and/or lifting force in operation of the wind turbine. This due to the fact that the shorter the distance between the connecting point and the tower wall itself is, the more is the local bending moment reduced.

According to a second embodiment which is preferably, but necessarily combined with the first embodiment of the invention, a tower of a wind turbine assembly according to the invention comprises a connecting portion arranged to interface with a nacelle of a wind turbine, whereby the connecting portion comprises a first flange at an interface to the nacelle and whereby the connecting portion comprises an essentially tubular adapter element on which the first flange is arranged.

Such adapter element can be considered to be an uppermost tower segment of the tower, but it has a lesser extension (preferably only about 0,5 to 2 metres) along its main axis, i.e. the axis of the tubular shape, than a usual tower segment. The use of such adapter element implies that (in case of the use of a first exterior flange) nearly up to the top of the tower, state-of-the art segments (i.e. with interior flanges rather than exterior flanges) can be used and that the adapter element can be used to adapt to the connecting portion with the first exterior flange. However, also when a first interior flange is used at the interface to the nacelle, the use of an adapter element has major advantages:

The adapter element can be assembled together with a yaw ring of the wind turbine's yaw system connected with that, in particular on a ground level before both elements are lifted together up to the level where the adapter is going to be installed. This makes it easier to assemble the yaw ring because it is already assembled at ground level and it also means that only one lifting procedure for the adapter element and for the yaw ring is needed. This provides for additional savings of time and thus costs and possibly also for a better and more controlled connection between the yaw ring and the adapter element.

Thus, according to one embodiment of the invention a method of manufacturing a tower of a wind turbine respectively a wind turbine assembly with a tower comprises the steps of
- arranging an essentially tubular adapter element on a connecting portion such that the adapter element comprises a first flange,
- attaching a yaw ring to the adapter element and lifting the adapter element together with the attached yaw ring to a top end region of the tower.

Another embodiment of a method according to the invention of manufacturing a tower of a wind turbine and/or of a wind turbine assembly with a tower (which can be used alternatively or additionally to the previously mentioned embodiment) comprises the step of arranging a connecting portion on the tower, which connecting portion comprises a first, exterior, flange extending to the exterior of the tower.

The invention also concerns a wind turbine assembly comprising a tower according to the invention and a nacelle component. Such a nacelle component can only comprise a yaw ring, but also a bedframe and/or a canopy of a wind turbine nacelle. As mentioned, if the complete nacelle together with the hub and rotors is attached, the wind turbine assembly can also be considered to be a complete wind turbine.

Further, the invention concerns a wind turbine assembly, in particular with the above-mentioned features, comprising a nacelle canopy which nacelle canopy comprises a service hatch in a lower part of the canopy, which service hatch is arranged to face a tower of a wind turbine to permit access to a connecting portion of the tower towards the nacelle. Such service hatch is thus realized and positioned such that staff can get access to the connection between the tower and the nacelle, in particular to the first, exterior, flange mentioned above.

An additional service hatch facing downwards from the nacelle may be realized as well or possibly the service hatch facing towards the connecting portion may be realized to also face downdwards. Such downward-facing service hatch can be used to hoist components of the nacelle, for instance for maintenance and/or assembly purposes. The service hatch which faces towards the connecting portion is also designed for maintenance and/or assembly purposes, however mainly for such service which concerns the connection between the tower and the nacelle. It is thus particularly suitable for a wind turbine assembly comprising the above-mentioned first, exterior, flange. This service hatch can be opened such that access to the connecting portion is provided.

The invention thus also concerns - designed to become a part of the wind turbine according to the previous paragraph - a canopy of a wind turbine nacelle, comprising a service hatch in a lower part of the canopy arranged to face a tower of the wind turbine, in an assembled state of the canopy, which service hatch is realized and arranged to permit access to a connecting portion of the tower towards the nacelle in the assembled state of the wind turbine nacelle in a wind turbine assembly.

Such canopy can be manufactured by a method of manufacturing a canopy of a wind turbine nacelle, which method comprises the step of arranging a service hatch in a lower part of the canopy to face a tower of the wind turbine in an assembled state of the canopy in a wind turbine arrangement, such that the service hatch permits access to a connecting portion of the tower in the assembled state.

Particularly advantageous embodiments and features of the invention are given by the dependent claims, as revealed in the following description. Thereby, features revealed in the context of one of the methods may also be realized in the context of the respective other method and/or in the context of any one of the embodiments of the canopy and/or tower and/or wind turbine assembly according to the invention unless the contrary is explicitly stated.

The above-mentioned adapter element preferably comprises a asecond, preferably interior, flange preferably arranged to extend into the interior of the tower, which second flange is arranged on an opposite side of the first flange along the extension of the adapter element from a nacelle location downwards i.e. along the main axis of the tower. The second flange is thus designed to connect to the next lower tower segment of the tower, preferably on the interior side of the tower so that this next lower tower segment can be designed according to the state-of-the-art, i.e. also with an interior flange.

The connection between the tower and the nacelle can particularly be realized by a yaw ring being fixed to the first flange, preferably by a connection comprising bolts. Such yaw ring may have the same (standard) dimensions as a yaw ring according to the state-of-the art, but it may also have a larger or smaller diameter.

It is principally possible to use a connecting portion with a flange extending to the exterior and to the interior of the connecting portion. This can further increase the stability of the connection between the tower and the nacelle (components). It is however preferred that the connecting portion comprises a single flange at the interface to the nacelle facing in exactly one direction, which is the first flange as mentioned above, i.e. not a combination of two first flanges. Such construction is particularly effective with respect to effort and material and still sufficient to produce a stronger connection between the tower and the nacelle and/or to reduce overall construction material of the tower.

A wind turbine assembly according to the invention preferably comprises a yaw ring attached to the first flange and a clamp arranged to encompass at least a part of the yaw ring in the interior of the tower. Such clamp connected for instance to a bedframe of the nacelle provides a resistance towards that movement of the nacelle upwards away from the tower. Because this clamp is arranged in the interior of the tower and the first flange preferably at the exterior that implies that the clamp in such alignment can not interfere or get in contact with the connection between the tower and the nacelle, i.e. with the first flange and with bolts going through that first flange in the direction of the nacelle. This way the yaw clamp and the connection components do not stand in each other's way.

Further it has proven advantageous that a wind turbine according to the invention comprises a yaw ring attached to the first flange and a yaw motor connected to the yaw ring, which yaw motor is arranged on the exterior of the tower. Because the yaw motor can be located more remotely from the connection between the tower and the nacelle, it is advantageous to place it where this connection takes place, i.e. in the region of the first flange, which is thus preferably an exterior flange. In combination with an inside clamp and an outside motor it is also clear that the clamp on the motor do not stand in each other's way.

Preferably such wind turbine assembly comprises nylon pads between the clamp and/or the yaw motor on the one hand and the yaw ring one the other hand. This provides for a reduced friction and also permits for a good control of the position of for instance a bedframe or of the overall nacelle.

In the embodiment of the invention with the service hatch towards the connecting portion, it is preferred that the service hatch is realized to permit access to an exterior first flange of the connecting portion. This permits for a particularly easy access to such exterior first flange, which means that the combination of an exterior first flange with a service hatch of the above-mentioned kind makes it possible to service the connection between the tower and the nacelle very easily and at reduced costs and time.

The service hatch is preferably arranged to extend at least 80°, preferably at least 100°, most preferred at least 120° about a circumference of the tower adjacent to the connecting portion. Thereby is meant a radial extension of the service hatch, which provides an easy access to a relatively wide area along the circumference of the tower. For instance with an extension of at least 120° the nacelle only has to be rotated three times by a third of a circle in order to provide access for staff all around the circumference of the tower in the area of the connecting portion.

Other objects and features of the present invention will become apparent from the following detailed descriptions considered in conjunction with the accompanying drawings. It is to be understood, however, that the drawings are designed solely for the purposes of illustration and not as a definition of the limits of the invention.

In the drawings, like reference numbers refer to like objects throughout. Objects in the diagrams are not necessarily drawn to scale.
Fig. 1 shows a cross-sectional view of a wind turbine according to the state-of-the-art.
Fig. 2 shows a more detailed cross-sectional view of the same wind turbine as in Fig. 1,
Fig. 3 shows the same detailed cross-sectional view of a wind turbine assembly according to embodiment of the invention,
Fig. 4 shows details of the connection region of the wind turbine assembly in Fig. 3,
Fig. 5 shows a perspective inside view of a wind turbine assembly according to an embodiment of the invention,
Fig. 6 shows a more detailed inside perspective view of the same wind turbine assembly as in Fig. 5.
Figs. 1 and 2 have been described above in the context of the description of the state-of-the-art.

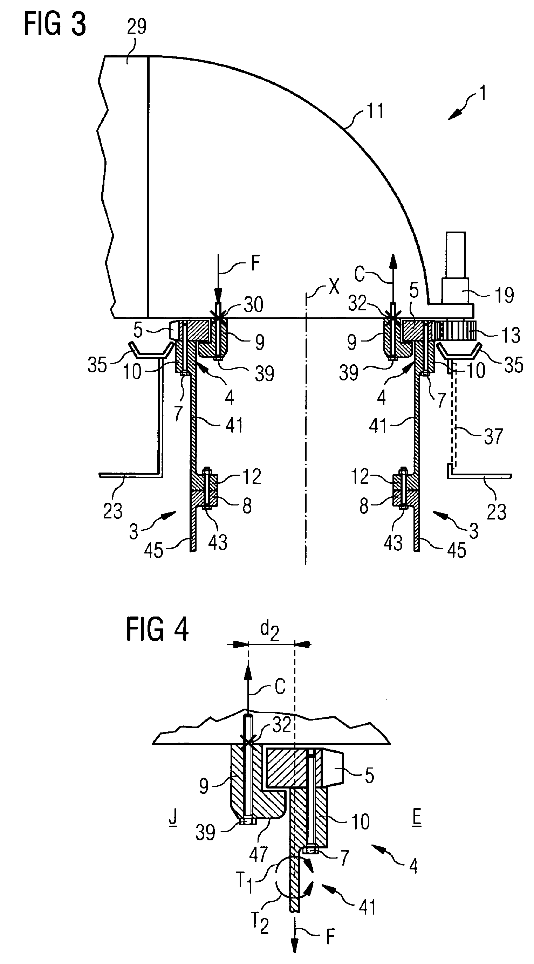

Fig. 3 shows a detail of a wind turbine assembly 1 which is essentially the same detail as in Fig. 2, but with a difference that the wind turbine assembly ones here is according to an embodiment of the invention.

For reasons of clarity, those parts of the wind turbine assembly according to Fig. 3 which are the same as those of the wind turbine assembly according to Fig. 2 are not mentioned again.

Here, the upper part of the tower 3 is comprised of an adapter element 41 which extends to the bedframe 11. On its lower end along the main axis X of the tower 3 the adapter element 41 comprises a second, inside, flange 12 which is connected by bolts 43 to an inside flange 8 of a lower tower segment 45. On its opposite side facing towards the nacelle 21, i.e. to the bedframe 11, the adapter element 41 comprises a first, exterior, flange 10 which is directed to the outside E of the tower 3. This exterior first flange 10 is connected to the yaw ring by bolts 7 as already described with reference to the state-of-the-art.

What can also be seen is a part of the nacelle 21, namely the lower part of a canopy 23 of the nacelle 21. In its part directed towards the yaw ring 5 the canopy 23 comprises a grease collector 35 and below that, on the right-hand side, a service hatch 37 directed towards the tower 3. Through the service hatch 37 staff can get access to the connection between the tower 3 and the nacelle 21, namely here to the exterior first flange 10, for instance to tighten the bolts 7.

Figure 4 shows more detailed view of the connection between the tower 3 and the nacelle 21 at the right-hand side, whereby the yaw motor 19 together with the toothed wheel 13 is not shown in this depiction. The yaw clamp 9 has an extension 47 which extends underneath the yaw ring 5 in order to withhold counter forces C as described above. By bolts 39 the yaw clamp 9 is connected to the bedframe 11.

Comparing the state-of-the-art as shown in Fig. 2 with the embodiment of Fig. 4, the effect of the first exterior flange 10 in comparison with a first interior flange 8 can be explained: The distance d₁ between the wall of the tower 3 and the connection points 30, 32 is greater than the distance d₂ between these two points in Figure 4. This is due to the fact that an interior first flange automatically necessitates a larger distance d₁ due to its own extensions which stand in the way of the yaw clamp 9. In contrast, the exterior first flange provides for a reduction of this distance which thus become the (reduced) distance d₂. Therefore, the local bending moment in the wall of the tower 3 (in this case of the adapter element 41) is substantially reduced.

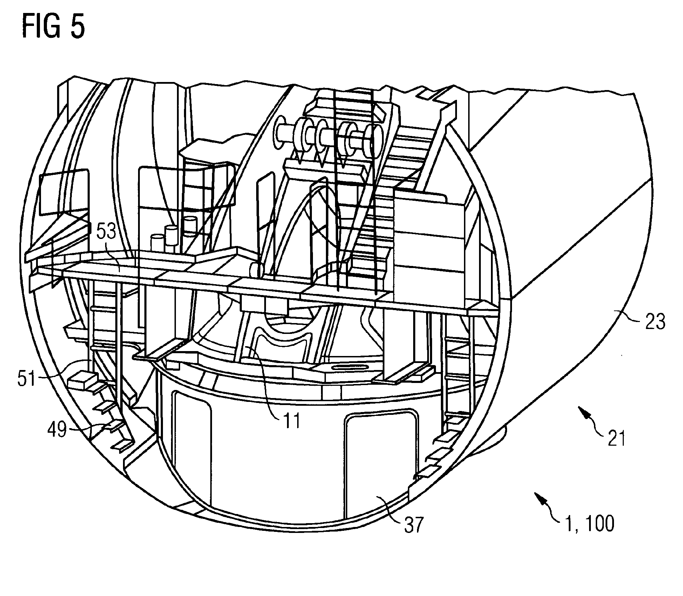

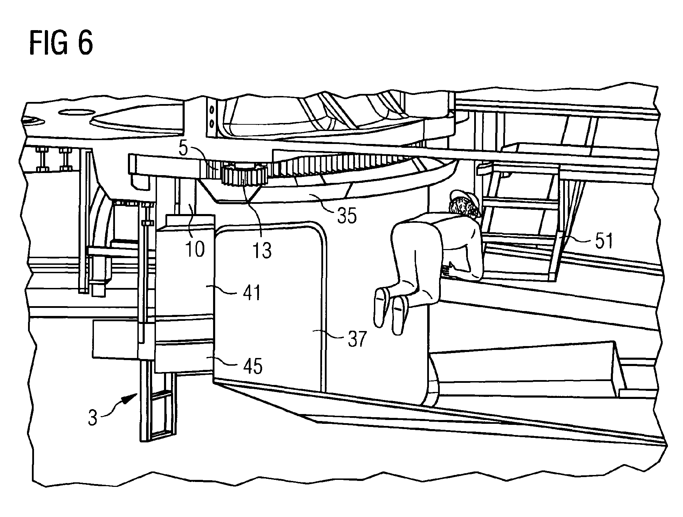

Figure 5 shows an inside perspective view of a nacelle 21 according to an embodiment of the invention. Inside the nacelle 21 there lead from a higher platform level 53 a ladder 51 and from there downwards several steps 49 towards a service hatch 37 directed in the direction of the tower 3 (not shown). There can also be seen the bedframe 11 which rests on the tower 3. By climbing down the ladder 51 and the steps 49 and opening the service hatch 37 one can easily get access to the connection between the tower 3 and the nacelle 21. In a more detailed view this can also be seen in Fig. 6, in which the connection between the tower 3 and the nacelle 21 via the first (exterior) flange 10 to the yaw ring 5 is also depicted.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. Tower (3) of a wind turbine assembly (1) with a connecting portion (4) arranged to interface with a nacelle (21) of a wind turbine (100),
**characterized in that**
the connecting portion (4) comprises a first, exterior, flange (10) at an interface to the nacelle (21) which first flange (10) extends to the exterior (E) of the tower (3) and is realised to be attached to a yaw ring of a yaw motor (19) arranged on the exterior (E) of the tower (3).

2. Tower (3) according to claim 1, wherein the connecting portion (4) comprises an essentially tubular adapter element (41) on which the first flange (10) is arranged.

3. Tower according to claim 2, whereby the adapter element (41) comprises a second, preferably interior, flange (12), preferably arranged to extend into the interior (J) of the tower which second flange (12) is arranged on an opposite side of the first flange (10) along the extension of the adapter element (41) from a nacelle location downwards.

4. Tower according to any of the preceding claims, whereby a yaw ring (5) is fixed to the first flange (10), preferably by a connection comprising bolts (7).

5. Tower according to any of the preceding claims, whereby the connecting portion (4) comprises a single flange (10) at the interface to the nacelle facing in exactly one direction which is the first flange (10).

6. Wind turbine assembly (1) comprising a tower (3) according to any of the preceding claims and a nacelle component.

7. Wind turbine assembly according to claim 6, comprising a yaw ring (5) attached to the first flange (10) and a clamp (9) arranged to encompass at least a part of the yaw ring (5) in the interior (J) of the tower (3).

8. Wind turbine assembly according to claim 6 or 7, comprising a yaw ring (5) attached to the first flange (10) and a yaw motor (19) connected to the yaw ring (5), which yaw motor (19) is arranged on the exterior (E) of the tower (3).

9. Wind turbine assembly according to any of claims 6 to 8, comprising a nacelle canopy (23) which nacelle canopy (23) comprises a service hatch (37) in a lower part of the canopy (23), which service hatch (37) is arranged to face a tower (3) of a wind turbine (100) to permit access to a connecting portion (4) of the tower (3) towards the nacelle (21).

10. Wind turbine assembly according to claim 9, whereby the service hatch (37) is realized to permit access to a first, exterior, flange (10) of the connecting portion (4).

11. Wind turbine assembly according to claim 9 or 10, whereby the service hatch (37) is arranged to extend at least 80°, preferably at least 100°, most preferred at least 120° about a circumference of the tower (3) adjacent to the connecting portion (4).

12. Canopy (23) of a wind turbine nacelle (21) of a wind turbine assembly (1) according to any of claims 6 to 11, comprising a service hatch (37) in a lower part of the canopy, which service hatch (37) is realized and arranged to permit access to an exterior flange (10) of the connecting portion (4) of the tower (3).

13. Method of manufacturing a tower (3) of a wind turbine (100) and/or a wind turbine assembly (1) with a tower (3), which method comprises the step of arranging a connecting portion (4) on the tower (3), which connecting portion (4) comprises a first, exterior, flange (10) extending to the exterior (E) of the tower (3),
**characterized in that**
the first flange (10) is realised for attachment to a yaw ring of a yaw motor (19) arranged on the exterior (E) of the tower (3).

14. Method according to claim 13, wherein the connecting portion (4) comprises an essentially tubular adapter element (41) on which the first flange (10) is arranged and wherein the step of arranging the adapter element (41) on the tower (3)is preceded by the steps of attaching a yaw ring (5) to the adapter element (41) and lifting the adapter element (41) together with the attached yaw ring (5) to a top end region of the tower (3).

## Patentansprüche

1. Turm (3) einer Windturbinenanordnung (1) mit einem Verbindungsabschnitt (4), der so angeordnet ist, dass er an eine Gondel (21) einer Windturbine (100) anschließt,
**dadurch gekennzeichnet, dass**
der Verbindungsabschnitt (4) einen ersten, äußeren Flansch (10) an einer Anschlussfläche zur Gondel (21) umfasst, wobei der erste Flansch (10) zur Außenseite (E) des Turms (3) hin verläuft und so ausgelegt ist, dass er sich an einem Nachführring eines Nachführmotors (19) anbringen lässt, der an der Außenseite (E) des Turms (3) angeordnet ist.

2. Turm (3) nach Anspruch 1, bei dem der Verbindungsabschnitt (4) ein im Wesentlichen rohrförmiges Adapterelement (41) umfasst, an dem der erste Flansch (10) angeordnet ist.

3. Turm nach Anspruch 2, bei dem das Adapterelement (41) einen zweiten, vorzugsweise inneren Flansch (12) umfasst, der vorzugsweise so angeordnet ist, dass er ins Innere (J) des Turms hinein verläuft, wobei der zweite Flansch (12) an der Verlängerung des Adapterelements (41) entlang von einer Gondelposition ausgehend nach unten auf einer dem ersten Flansch (10) gegenüberliegenden Seite angeordnet ist.

4. Turm nach einem der vorhergehenden Ansprüche, bei dem vorzugsweise über eine Verbindung mit Bolzen (7) ein Nachführring (5) an dem ersten Flansch (10) befestigt ist.

5. Turm nach einem der vorhergehenden Ansprüche, bei dem der Verbindungsabschnitt (4) einen einzelnen Flansch (10), bei dem es sich um den ersten Flansch (10) handelt, an der Anschlussfläche zur Gondel umfasst, der in genau eine Richtung zeigt.

6. Windturbinenanordnung (1) mit einem Turm (3) nach einem der vorhergehenden Ansprüche und einem Gondelbauteil.

7. Windturbinenanordnung nach Anspruch 6 mit einem am ersten Flansch (10) angebrachten Nachführring (5) und einer Schelle (9), die so angeordnet ist, dass sie zumindest einen Teil des Nachführrings (5) im Innern (J) des Turms (3) umgibt.

8. Windturbinenanordnung nach Anspruch 6 oder 7 mit einem an dem ersten Flansch (10) angebrachten Nachführring (5) und einem mit dem Nachführring (5) verbundenen Nachführmotor (19), der an der Außenseite (E) des Turms (3) angeordnet ist.

9. Windturbinenanordnung nach einem der Ansprüche 6 bis 8 mit einem Gondelgehäuse (23), das in einem unteren Teil eine Wartungsluke (37) umfasst, welche so angeordnet ist, dass sie einem Turm (3) einer Windturbine (100) gegenüberliegt und Zugang zu einem Verbindungsabschnitt (4) des Turms (3) zur Gondel (21) gewährt.

10. Windturbinenanordnung nach Anspruch 9, bei der die Wartungsluke (37) so ausgelegt ist, dass sie Zugang zu einem ersten, äußeren Flansch (10) des Verbindungsabschnitts (4) gewährt.

11. Windturbinenanordnung nach Anspruch 9 oder 10, bei der die Wartungsluke (37) so angeordnet ist, dass sie neben dem Verbindungsabschnitt (4) mindestens 80°, vorzugsweise mindestens 100°, besonders bevorzugt mindestens 120° um einen Umfang des Turms (3) herum verläuft.

12. Gehäuse (23) einer Windturbinengondel (21) einer Windturbinenanordnung (1) nach einem der Ansprüche 6 bis 11 mit einer Wartungsluke (37) in einem unteren Teil des Gehäuses, wobei die Wartungsluke (37) so ausgelegt und angeordnet ist, dass sie Zugang zu einem äußeren Flansch (10) des Verbindungsabschnitts (4) des Turms (3) gewährt.

13. Verfahren zum Herstellen eines Turms (3) einer Windturbine (100) und/ oder einer Windturbinenanordnung (1) mit einem Turm (3), welches das Anordnen eines Verbindungsabschnitts (4) am Turm (3) umfasst, wobei der Verbindungsabschnitt (4) einen ersten, äußeren Flansch (10) umfasst, der zur Außenseite (E) des Turms (3) hin verläuft,
**dadurch gekennzeichnet, dass**
der erste Flansch (10) für das Anbringen an einem Nachführring eines Nachführmotors (19) ausgelegt ist, der an der Außenseite (E) des Turms (3) angeordnet ist.

14. Verfahren nach Anspruch 13, bei dem der Verbindungsabschnitt (4) ein im Wesentlichen rohrförmiges Adapterelement (41) umfasst, an dem der erste Flansch (10) angeordnet ist, und dem Anordnen des Adapterelements (41) am Turm (3) ein Anbringen eines Nachführrings (5) am Adapterelement (41) und ein Anheben des Adapterelements (41) zusammen mit dem angebrachten Nachführring (5) auf einen oberen Endbereich des Turms (3) vorausgeht.

## Revendications

1. Tour (3) d'un ensemble (1) d'éolienne avec une partie de connexion (4) agencée pour être en interface avec une nacelle (21) d'une éolienne (100),
**caractérisée en ce que**
la partie de connexion (4) comprend une première bride (10) extérieure au niveau d'une interface avec la nacelle (21), laquelle première bride (10) s'étend jusqu'à l'extérieur (E) de la tour (3) et est réalisée de façon à être attachée à une couronne d'orientation d'un moteur d'orientation (19) agencé sur l'extérieur (E) de la tour (3).

2. Tour (3) selon la revendication 1, dans laquelle la partie de connexion (4) comprend un élément adaptateur (41) essentiellement tubulaire sur lequel la première bride (10) est agencée.

3. Tour selon la revendication 2, dans laquelle l'élément adaptateur (41) comprend une deuxième bride (12) préférablement intérieure, préférablement agencée de façon à s'étendre dans l'intérieur (J) de la tour, laquelle deuxième bride (12) est agencée sur un côté opposé de la première bride (10) le long de l'extension de l'élément adaptateur (41) d'un emplacement de nacelle vers le bas.

4. Tour selon l'une quelconque des revendications précédentes, dans laquelle une couronne d'orientation (5) est fixée à la première bride (10), préférablement par une connexion comprenant des boulons (7).

5. Tour selon l'une quelconque des revendications précédentes, dans laquelle la partie de connexion (4) comprend une bride (10) unique au niveau de l'interface avec la nacelle faisant face dans exactement un sens, qui est la première bride (10).

6. Ensemble (1) d'éolienne comprenant une tour (3) selon l'une quelconque des revendications précédentes et un composant de nacelle.

7. Ensemble d'éolienne selon la revendication 6, comprenant une couronne d'orientation (5) attachée à la première bride (10) et un étrier (9) agencé de façon à comprendre au moins une partie de la couronne d'orientation (5) dans l'intérieur (J) de la tour (3).

8. Ensemble d'éolienne selon la revendication 6 ou 7, comprenant une couronne d'orientation (5) attachée à la première bride (10) et un moteur d'orientation (19) connecté à la couronne d'orientation (5), lequel moteur d'orientation (19) est agencé sur l'extérieur (E) de la tour (3).

9. Ensemble d'éolienne selon l'une quelconque des revendications 6 à 8, comprenant un auvent (23) de nacelle, lequel auvent (23) de nacelle comprend une trappe de service (37) dans une partie inférieure de l'auvent (23), laquelle trappe de service (37) est agencée de façon à faire face à une tour (3) d'une éolienne (100) pour permettre l'accès à une partie de connexion (4) de la tour (3) vers la nacelle (21).

10. Ensemble d'éolienne selon la revendication 9, dans lequel la trappe de service (37) est réalisée de façon à permettre l'accès à une première bride (10) extérieure de la partie de connexion (4).

11. Ensemble d'éolienne selon la revendication 9 ou 10, dans lequel la trappe de service (37) est agencée de façon à s'étendre sur au moins 80°, préférablement au moins 100°, le plus préféré au moins 120° autour d'une circonférence de la tour (3) adjacente à la partie de connexion (4).

12. Auvent (23) d'une nacelle (21) d'éolienne d'un ensemble (1) d'éolienne selon l'une quelconque des revendications 6 à 11, comprenant une trappe de service (37) dans une partie inférieure de l'auvent, laquelle trappe de service (37) est réalisée et agencée pour permettre l'accès à une bride (10) extérieure de la partie de connexion (4) de la tour (3).

13. Procédé de fabrication d'une tour (3) d'une éolienne (100) et/ou d'un ensemble (1) d'éolienne avec une tour (3), lequel procédé comprend l'étape d'agencement d'une partie de connexion (4) sur la tour (3), laquelle partie de connexion (4) comprend une première bride (10) extérieure s'étendant jusqu'à l'extérieur (E) de la tour (3),
**caractérisé en ce que**
la première bride (10) est réalisée de façon à être attachée à une couronne d'orientation d'un moteur d'orientation (19) agencé sur l'extérieur (E) de la tour (3).

14. Procédé selon la revendication 13, dans lequel la partie de connexion (4) comprend un élément adaptateur (41) essentiellement tubulaire sur lequel la première bride (10) est agencée et dans lequel l'étape d'agencement de l'élément adaptateur (41) sur la tour (3) est précédé par les étapes de fixation d'une couronne d'orientation (5) à l'élément adaptateur (41) et de levage de l'élément adaptateur (41) ensemble avec la couronne d'orientation (5) fixée jusqu'à une région d'extrémité supérieure de la tour (3).
